# EUROPÄISCHE PATENTSCHRIFT

(11) **EP 2 185 842 B1**
(45) Veröffentlichungstag und Bekanntmachung des Hinweises auf die Patenterteilung: **19.10.2011**
(21) Anmeldenummer: 08786873.3
(22) Anmeldetag: 05.08.2008
(51) Int. Cl.: F16K 11/074

(54) **MEHRFACHZUGABEVENTIL FÜR EINE ANLAGE ZUM DOSIEREN VON FLÜSSIGEN ODER PASTÖSEN WASCHHILFSMITTELN UND VERFAHREN ZUM BETREIBEN DES MEHRFACHZUGABEVENTILS**
MULTIPLE-ACTION ADDITION VALVE FOR A SYSTEM FOR METERING LIQUID OR PASTY WASHING AIDS AND METHOD FOR OPERATING THE MULTIPLE-ACTION ADDITION VALVE
SOUPAPE D'ALIMENTATION À VOIES MULITPLES POUR INSTALLATION DE DOSAGE D'ADJUVANTS DE LAVAGE LIQUIDES OU PÂTEUX ET PROCEDE D'EXPLOITATION DE LA SOUPAPE À VOIES MULTIPLES

(30) Priorität: 10.08.2007 DE 102007037883
(43) Veröffentlichungstag der Anmeldung: 19.05.2010
(73) Patentinhaber: BSH Bosch und Siemens Hausgeräte GmbH, 81739 München (DE)
(72) Erfinder: SCHULZE, Ingo, 16341 Panketal (DE)
(86) Internationale Anmeldenummer: PCT/EP2008/060263
(87) Internationale Veröffentlichungsnummer: WO 2009/021872

(56) Entgegenhaltungen:
- DE-A1- 2 722 363
- DE-A1- 19 736 982
- US-A- 4 310 022
- US-B1- 6 367 504

## Beschreibung

Die Erfindung betrifft eine automatisch gesteuerte Waschmaschine mit einem Mehrfachzugabeventil für eine Anlage zum maschinellen Dosieren von in Vorratsbehältern vorgehaltenen, flüssigen oder pastösen Waschhilfsmitteln mit einer in einem Gehäuseboden (des Mehrfachzugabeventils) angeordneten, zentralen Flüssigkeitsleitung und mehreren auf einer konzentrisch zur Achse eines Rotors verlaufenden Kreislinie im Gehäuseboden angeordneten Stutzen, die einzeln durch eine Verbindungsleitung innerhalb des motorisch antreibbaren Rotors mit dem Abgang verbindbar sind und die für die Verbindung mit der Verbindungsleitung eine Dichtung aufweisen. Die Erfindung betrifft außerdem ein Verfahren zum Betreiben eines solchen Mehrfachzugabeventils in einer automatisch gesteuerten Waschmaschine.

Aus DE 197 36 982 A1 ist ein Mehrfachzugabeventil zum Zugeben von Anwendungsverdünnungen, die aus in Vorratsbehältern vorgehaltenen, flüssigen oder pastösen konzentrierten Waschhilfsmitteln und einer Verdünnungsflüssigkeit, vorzugsweise Wasser, hergestellt worden sind, bekannt. Dieses Mehrfachzugabeventil kommt für die Anwendung in kommerziellen Waschmaschinen in Betracht, um von einer zentralen Abgabeeinrichtung für Waschhilfsmittel aus über die Flüssigkeitsleitung mehrere Maschinen mit bereits vorgemischten Dosen von Anwendungsverdünnungen zu versorgen. Dazu werden die Einzeldosen von bevorrateten Waschhilfsmittel-Konzentraten mit Wasser verdünnt und dann an ein "Mehrfachöffnungsventil" benanntes Mehrfachzugabeventil gegeben. Von dort werden sie als Anwendungsverdünnung über die Stutzen an eine Mehrzahl von Waschmaschinen verteilt.

Das bekannte Mehrfachzugabeventil ist zusätzlich zu seinem unterschiedlichen Einsatzgebiet auch kompliziert und aufwändig gebaut. Insbesondere ist ein teurer Mechanismus vorhanden, durch den die im Gehäuseboden angeordneten Stutzen immer dann von der im Rotor angeordneten Verbindungsleitung hydraulisch getrennt werden, bevor der Rotor in eine neue Position gedreht werden soll. Dazu hebt sich ein kegelförmiges Teil der Verbindungsleitung aus einem Trichter des Stutzens und entlastet gleichzeitig die umlaufende Ringdichtung. Nach Einfahren in die neue Position muss der Rotor wieder gesenkt werden, damit sich das kegelförmige Teil in den Trichter des anderen Stutzens senkt und diese Dichtung belastet. Zum Heben und Senken des Rotors wird ein Druckluftzylinder benutzt, der an der Triebwelle des Rotors angreift.

Der Erfindung liegt die Aufgabe zugrunde, ein Mehrfachzugabeventil der eingangs beschriebenen Art für Waschmaschinen gebrauchsfähig zu machen, die im Haushalt zur Anwendung kommen und bei denen je ein Konzentrat von Waschhilfsmitteln aus mehreren Vorratsbehältern in eine Mischkammer geführt werden soll, von wo aus es mit (vorzugsweise) Wasser verdünnt und vermischt und anschließend in den Wäschebehandlungsraum dieser einen Waschmaschine geführt werden sollen. Eine weitere und wesentliche Aufgabe der Erfindung ist, dass ein solches Mehrfachzugabeventil wegen seiner Verwendung in einem Produkt der Konsumgüterindustrie außerordentlich kostengünstig aufgebaut sein, dennoch aber über eine Lebensdauer von mindestens 10 Jahren bei normaler Belastung stabil und sicher funktionieren muss. So ist zwar wie beim bekannten Mehrfachöffnungsventil wichtig, die unterschiedlichen Flüssigkeitsleitungen gegeneinander abzudichten, jedoch darf der Aufwand dafür nicht so hoch sein.

Erfindungsgemäß wird diese Aufgabe durch das Kennzeichen des Anspruches 1 in der Weise gelöst, dass das Mehrfachzugabeventil in der Weise zum Zugeben von ausgewählten flüssigen oder pastösen Waschhilfsmitteln dient, dass jeder der Stutzen an einen der Vorratsbehälter angeschlossen und die Flüssigkeitsleitung über eine Pumpe mit einer Zugabeeinrichtung für einen Wäschebehandlungsraum verbindbar ist, dass der Rotor durch eine dauerhaft axial auf ihn in Richtung des Gehäusebodens wirkende Kraft die Dichtungen presst, bis die Kontaktflächen des Rotors und des Gehäusebodens im Wesentlichen möglichst eng gegenüber stehen, und dass eine Zuführung von Spülflüssigkeit, vorzugsweise Wasser, vorgesehen ist und keine Dichtung im Übergang zur Verbindungsleitung aufweist. Hierdurch kann einerseits auf eine aufwändige Einrichtung zum Lösen der Stutzen- und Verbindungsleitungsübergänge verzichtet werden. Andererseits ist das Mehrfachzugabeventil durch die beschriebene Anordnung zu Auswahl eines von mehreren Waschhilfsmitteln für eine Waschmaschine geeignet. Die enge Gegenüberstellung des Rotors und des Gehäusebodens vermindern ihren Abstand auf einen sehr geringen Abstand bis nahezu Null und bilden dadurch bereits eine gute Abdichtung zwischen den einzelnen Stutzenübergängen. Da eine dauerhaft auf den Rotor wirkende Kraft, z. B. eine Federkraft, aber auch Grenzen hat, sind noch Dichtungen vorgesehen, welche die Übergänge umfassen.

Eine Anlage zum maschinellen Dosieren von mehreren unterschiedlichen Waschhilfsmitteln wird regelmäßig gereinigt werden müssen. Daher dient zusätzlich eine Zuführung von Spülwasser nach oder vor jedem Dosiervorgang einer guten Reinigung der von den Waschhilfsmitteln möglicherweise benetzten Flächen, so dass im Betrieb mit gegenseitigen Beeinflussungen oder Beeinträchtigungen der Waschhilfsmittel untereinander nicht zu rechnen ist. Es sind dazu auch andere Systeme bekannt, welche die Leitungen der Anlage nach oder vor jedem Dosiervorgang spülen (DE 10 2007 032 759.7 des vorliegenden Patentanmelders). In einer möglichen Weiterbildung des erfindungsgemäßen Mehrfachzugabeventils kann einer der Stutzen für die Zuführung von Spülflüssigkeit, vorzugsweise Wasser, vorgesehen sein und keine Dichtung zur Verbindungsleitung aufweisen. Im Falle seiner Ansteuerung kann der Stutzen nämlich Spülwasser in das Zugabesystem leiten, um unliebsame Vermischungen zwischen dem nachdosierten Waschhilfsmittel und dem Rest des zuvor dosierten Waschhilfsmittels zu vermeiden. Durch die fehlende Dichtung kann nun beim Spülen Wasser auch zwischen die beiden Flächen des Rotors und des Gehäusebodens gelangen und dort etwa abgelagerte Reste von Waschhilfsmitteln verdünnen und abspülen.

Die Kraft zwischen dem Rotor und dem Gehäuseboden kann durch eine zentral angeordnete Druckfeder zwischen einem Gehäusedeckel des Mehrfachzugabeventils und der oberen Rotorfläche dargestellt sein. Dadurch würde diese Kraft durch die Bemessung der Druckfeder eingestellt werden können. Sofern gemäß einer weiteren Ausbildung der Erfindung die Kraft durch eine passgenaue Positionierung des Rotors im Gehäuseboden dargestellt ist, kann diese Positionierung eine feste Einstellung der Kraft dadurch bewirken, dass die Positionierung justierbar ist. Beispielsweise kann der Gehäusedeckel mittels eines Gewindes in seiner Höhenposition justierbar und in dieser Position verrastbar sein.

Die Dichtungen bestehen beispielsweise aus einem hochflexiblen Material mit geringer Shore-Härte von ca. 30 bis ca. 40 Shore-Härte-Einheiten, damit geringe Toleranzen in der Höhenposition durch die Flexibilität der Dichtungen ausgeglichen werden können.

Die Spülsicherheit kann insbesondere durch eine Weiterbildung des erfindungsgemäßen Mehrfachzugabeventils verbessert werde, indem die Zuführung möglichst weit vom Abgang der zentralen Leitung entfernt angeordnet ist. Eine vorteilhafte Möglichkeit zur sehr weit entfernten Anordnung besteht darin, dass die Zuführung über der dem Gehäuseboden gegenüber liegenden Fläche des Rotors mündet und der Rotor in eine Drehposition bringbar ist, in der die über die Kreislinie streichende Mündung der Verbindungsleitung zwischen zwei für die flüssigen oder pastösen Waschhilfsmittel vorgesehenen Stutzen steht. Wenn gleichzeitig die Pumpe aktiv ist, wird Spülflüssigkeit intensiv zwischen die einander zugekehrten Flächen des Rotors und des Gehäusebodens gezogen bzw. gedrückt, und etwaige Waschhilfsmittelreste werden heraus gewaschen. Die Zuführung kann dabei durch einen weiteren Stutzen dargestellt sein, der in einem oberhalb des Rotors sitzenden Gehäusedeckel angeordnet ist.

Andererseits kann auch die Oberseite des Rotors frei zugänglich im Zuflussbereich der Spülflüssigkeit liegen. Dazu ist der Frischwasserzulauf der Waschmaschine bestens geeignet.

Die Erfindung ist durch eine Verfahrensweise am besten darstellbar, in der während des Spülvorgangs, in dem der Rotor in eine Drehposition für die Spülstellung gefahren und die Spülflüssigkeit von der Zuführung durch die Verbindungsleitung zur zentralen Flüssigkeitsleitung gefördert wird, der Rotor in der Drehposition um wenige Winkelgrade bewegt wird. Dadurch bewegen sich die einander zugekehrten Flächen des Rotors und des Gehäusebodens gegeneinander und lösen Adhäsionen in deren Zwischenraum, die durch Waschhilfsmittelreste gebildet wurden. In besonders vorteilhafter Weise wird dazu der Rotor in der Drehposition mit wechselnden Drehrichtungen bewegt, am besten sogar mit pulsierender Bewegung. Durch dieses Verfahren werden Waschhilfsmittelreste sehr schnell ausgewaschen.

Anhand von in der Zeichnung dargestellten Ausführungsbeispielen ist die Erfindung nachstehend näher erläutert. Es zeigen
- Fig. 1: eine schematische Darstellung einer Anlage zum maschinellen Dosieren von in Vorratsbehältern vorgehaltenen flüssigen Waschhilfsmitteln in einer Waschmaschine,
- Fig. 2: ein erfindungsgemäß gestaltetes Mehrfachzugabeventil im senkrechten Schnitt entlang der Schnittlinie II-II in Fig. 4,
- Fig. 3: eine vergrößerte Detailansicht des Schnitts gemäß Einzelheit III in Fig. 2 für eine Variante mit Spülung der Kontaktflächen,
- Fig. 4: eine Ansicht auf die Unterseite des Gehäusebodens mit den auf einer Kreisbahn verteilten und dem zentral angeordneten Stutzen,
- Fig. 5: eine schematische Darstellung einer alternativ ausgebildeten Anlage zum maschinellen Dosieren von in Vorratsbehältern vorgehaltenen flüssigen Waschhilfsmitteln in einer Waschmaschine,
- Fig. 6: ein erfindungsgemäß gestaltetes Mehrfachzugabeventil für eine alternativ ausgebildete Anlage gemäß Fig. 5 im senkrechten Schnitt entlang der Schnittlinie VI-VI in Fig. 8,
- Fig. 7: eine vergrößerte Detailansicht des Schnitts gemäß Einzelheit VII in Fig. 6 für eine Variante mit Spülung der Kontaktflächen mit Spülflüssigkeit, die aus dem Bereich der Kontaktflächenspalte abgesaugt wird, und
- Fig. 8: eine Ansicht auf die Unterseite des Gehäusebodens des alternativen Mehrfachzugabeventils gemäß Fig. 6 mit den auf einer Kreisbahn verteilten und dem zentral angeordneten Stutzen sowie mit einem Stutzen zur Zuführung von Spülflüssigkeit, der im Gehäusedeckel angeordnet ist.

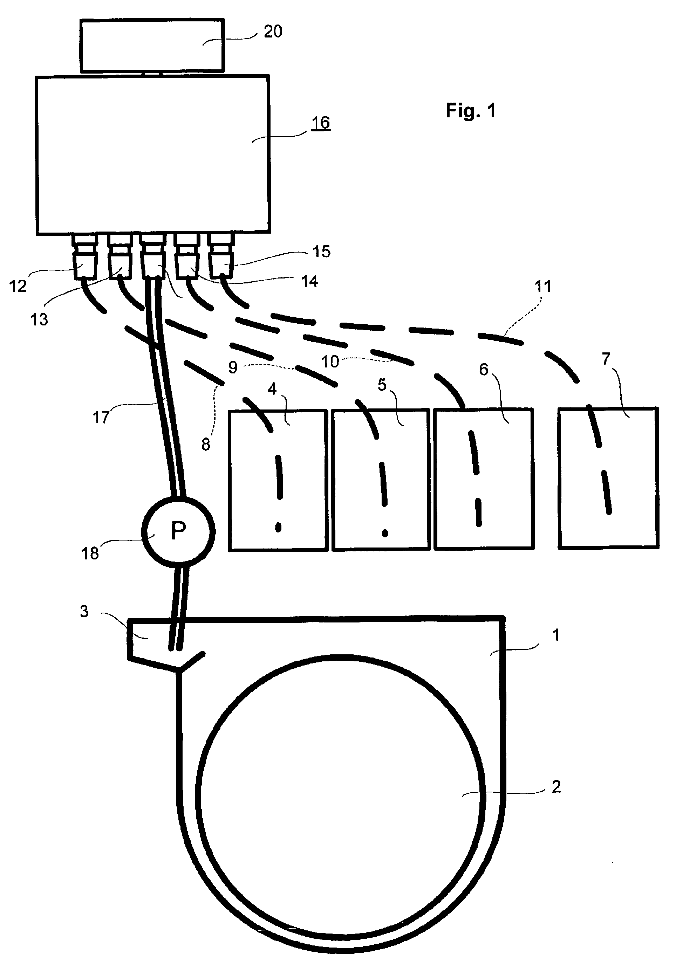

Die in Fig. 1 dargestellte Anlage zum maschinellen Dosieren ist hier gegenüber der Waschmaschine, von der nur der Laugenbehälter 1 und die darin drehbar gelagerte Wäschetrommel 2 sowie eine Einrichtung 3 zum Zugeben von Waschhilfsmitteln schematisch dargestellt sind, stark vergrößert gezeigt, damit ihr Aufbau deutlich zu erkennen ist. Diese Einrichtung 3 dient im Allgemeinen dazu, von Hand dosierte pulverförmige oder flüssige Waschhilfsmittel-Portionen zur Ausspülung durch Frischwasser aus einer nicht dargestellten Frischwasserleitung bereit zu legen. In dieser Dosier-Anlage sind Vorratsbehälter 4 bis 6 angeordnet, die zur Bevorratung von größeren Mengen von unterschiedlichen Waschhilfsmitteln dienen. Ein weiterer Vorratsbehälter 7 dient in diesem Beispiel dazu, eine genügend große Menge an frischen Wasser zu bevorraten, mit dem die Leitungen, die mit konzentrierten Waschhilfsmitteln benetzt werden, in einer Phase freigespült werden können, in der gerade kein Waschhilfsmittel beigegeben wird.

Jeder Vorratsbehälter 4 bis 7 ist über eine eigene Saugleitung 8 bis 11 mit je einem Stutzen 12 bis 15 eines Mehrfachzugabeventils 16 verbunden, das die Dosis aus jeweils einem der Vorratsbehälter 4 bis 7 über eine Flüssigkeitsleitung 17, eine Saugpumpe 18 und der Waschmitteleinspüleinrichtung 3 dem Laugenbehälter 1 zuführt. Im Mehrfachzugabeventil 16 existiert - wie weiter unten noch erläutert werden wird - eine positionierbare Verbindungsleitung, durch die wahlweise einer der Stutzen 12 bis 15 mit dem zentralen Stutzen 19 der Flüssigkeitsleitung 17 verbunden werden kann. Dazu dient ein auf der Oberseite des Mehrfachzugabeventils 16 montierter Getriebemotor 20 mit einer an sich bekannten Einrichtung zur Positionsbestimmung. Eine nicht dargestellte Steuereinrichtung hat Informationen, die den Getriebemotor entsprechend dem gewünschten Waschhilfsmittel ansteuern. Dann ist die jeweilige Saugleitung, z. B. 8 des Behälters 4, mit dem Stutzen 19 der Flüssigkeitsleitung 17 verbunden, um mittels der Pumpe 18 während einer ebenfalls von der Steuereinrichtung bemessenen Zeitdauer eine entsprechende Dosis des betreffenden Waschhilfsmittels abzusaugen und in den Laugenbehälter 1 zu fördern.

Nach jeder Förderung eines Waschhilfsmittels kann der gesamte Leitungsstrang von der Verbindungsleitung über den zentralen Stutzen 19, die Flüssigkeitsleitung 17 bis zur Pumpe 18 mit klarem Wasser nachgespült werden. Im dargestellten Beispiel ist das Wasser dazu im Behälter 7 bevorratet und wird zum Zwecke der Spülung über die Saugleitung 11, die Verbindungsleitung des Mehrfachzugabeventils 16 und den zentralen Stutzen 19 zur Pumpe 18 gesaugt. Während dieser Wasserförderung werden alle beteiligten Leitungsführungen gespült und die Verdünnungen zum Laugenbehälter 1 gefördert. Da der Steuereinrichtung bekannt ist, welche der bevorrateten Waschhilfsmittel sich gegenseitig nicht vertragen, muss nicht nach jeder Dosierung irgendeines Waschhilfsmittels gespült werden. Es genügen Spülungen nach der Dosierung eines Waschhilfsmittels, das sich mit demjenigen der folgenden Dosierung nicht verträgt, sei es, dass die Wirkung des nachdosierten Hilfsmittels beeinträchtigt wird oder beide Hilfsmittel miteinander reagieren und das Reaktionsprodukt in irgend einer Weise schädlich ist. Jedenfalls erhöhen solche Spülungen die Lebensdauer eines erfindungsgemäßen Mehrfachzugabeventils 16.

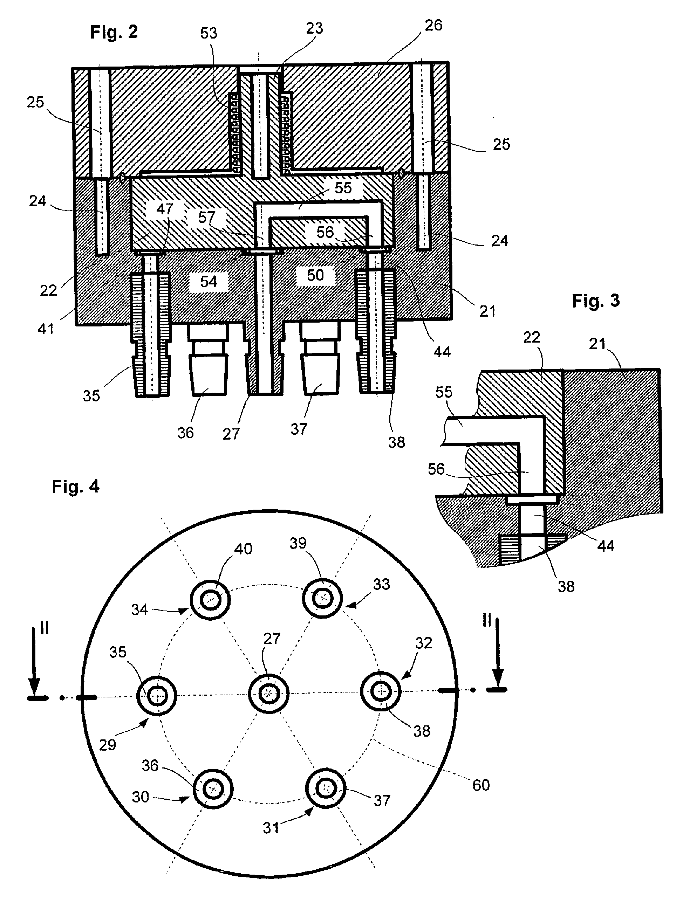

Aus Fig. 2 bis 4 ist ein Beispiel für ein solches Mehrfachzugabeventil 16 ersichtlich. Es besteht im Wesentlichen aus einem Gehäuseboden 21 mit einer gut passenden Höhle für den Rotor 22, der an seiner Oberseite einen Antriebsschaft 23 hat. Mit diesem Schaft 23 ist der Motor 20 gekoppelt. Bohrungen 24 im Gehäuseboden 21 und 25 im Gehäusedeckel 26, der den Schaft 23 lagert, dienen zur Schraubenbefestigung achsgleich untereinander.

Im Gehäuseboden 21 sind ein zentraler Stutzen 27 und sechs auf einem konzentrischen Kreis 28 angeordnete Stutzen 29 bis 34 angebracht. Während der zentrale Stutzen 27 einteiliger Bestandteil des Gehäusebodens 21 ist, bestehen die Stutzen 29 bis 34 aus je einem Einsatz 35 bis 40, die in gleichem Abstand zum zentralen Stutzen 27 und zum jeweils benachbarten Stutzen verteilt sind. Sie sind so ausgebildet, dass die Leitungen 8 bis 11 und 17 aus Schläuchen bestehen und leicht aufgeschoben werden können, ohne dass sie sich von selbst wieder lösen.

Die Mündungen der Stutzen 27 bzw. der den Einsätzen 35 bis 40 zugeordneten Kanäle 41 bis 46 sind mit Dichtringsitzen versehen, in die Dichtungen 47 bis 52 eingelegt sind. Diese Dichtungen bestehen aus einem hochelastischen Material mit geringer Shore-Härte von ca. 30 bis ca. 40 Shore-Härte-Einheiten und sind so dimensioniert, dass sie im entlasteten Zustand aus dem Dichtringsitz heraus ragen. Erst nach dem Einsetzen des Rotors 22 drückt dessen Unterseite - unterstützt durch eine zentrale Druckfeder 53 - die Dichtungsringe 47 bis 52 so stark zusammen, dass sich die planen Flächen der Unterseite des Rotors 22 und der Oberseite der Rotorhöhle im Gehäuseboden 21 mit geringst möglichem Abstand gegenüber stehen, so dass sie einen minimalen Spalt zwischen sich zulassen. Entsprechend ergeht es dem Dichtungsring 54 des zentralen Stutzens 27. Zur Flüssigkeitsverbindung je eines Stutzens 29 bis 34 mit dem zentralen Stutzen 27 in der jeweiligen Drehposition des Rotors 22 dient eine fest im Rotor 22 eingegossene Verbindungsleitung 55. Ihre Mündung 56 hat entsprechend der Drehposition des Rotors 22 jeweils Verbindung mit einer der Mündungen 41 bis 46 der auf dem Kreis verteilt angeordneten Stutzen 29 bis 34 und ihre Mündung 57 stets Verbindung mit dem zentralen Stutzen 27. In der dargestellten Drehposition verbindet die Verbindungsleitung 55 den zentralen Stutzen 27 mit dem äußeren Stutzen 32 (Einsatz 38), so dass die Pumpe 18 im Betrieb beispielsweise eine Dosis Spülwasser aus dem Vorratsbehälter 7 zieht.

Bei der in Fig. 3 dargestellten Variante fehlt der Dichtungsring 50 im Kanal 44 des Stutzens 32, in den der Einsatz 38 gezogen ist. Dieser Stutzen ist an die Saugleitung 11 angeschlossen, die dem Ansaugen von Spülwasser aus dem Behälter 7 dient. Führt daher der Kanal 44 Spülwasser, dann kann die fehlende Dichtung dafür sorgen, dass eventuelle Benetzungen der Kontaktflächen zwischen Gehäuseboden 21 und Rotor 22 durch Waschhilfsmittel freigespült werden und dadurch die Gefahr von Reaktionen mit anderen Waschhilfsmitteln mindert oder beseitigt. Ein solches Freispülen kann insbesondere dadurch begünstigt sein, dass anstelle des hier dargestellten Saugprinzips ein Druckprinzip angewendet wird, bei dem in der Saugleitung 11 und dann auch im Kanal 44 Druck steht, der ein Eindringen der Spülflüssigkeit zwischen die Kontaktflächen fördert.

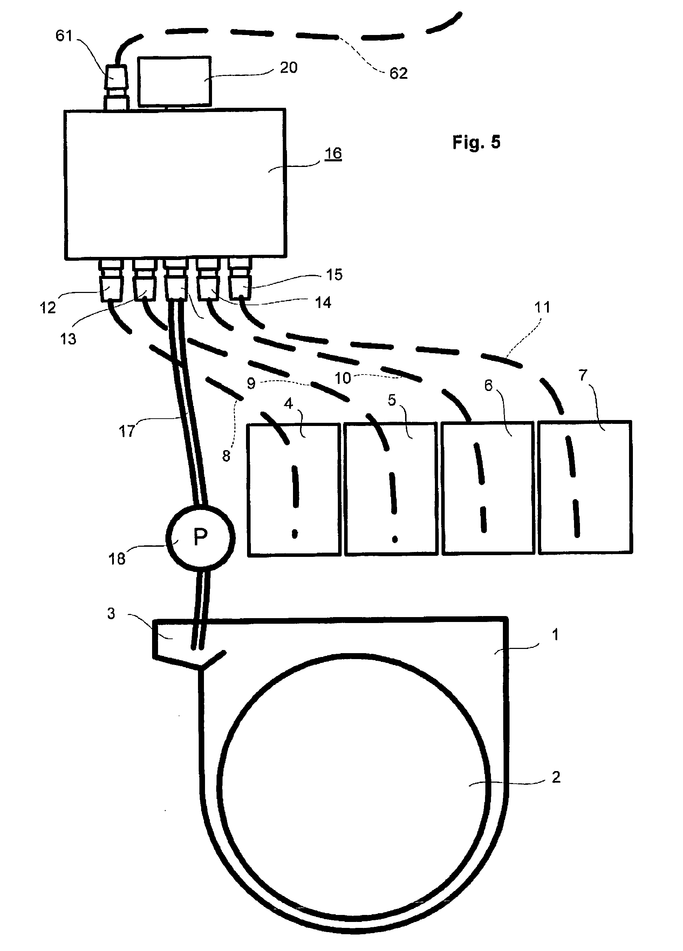

Bei der in Fig. 5 dargestellten Anlage sind die Vorratsbehälter 4 bis 7 ausnahmslos für die Bevorratung von Waschhilfsmitteln vorgesehen. Die Leitung 11 ist dann natürlich keine Spülleitung sondern wie die Leitungen 8 bis 10 eine Leitung zum Zuführen des jeweiligen Waschhilfsmittels aus dem Vorratsbehälter 7. Zur Realisation einer Spüleinrichtung ist an den oberen Teil des Mehrfachzugabeventils 16 ein Stutzen 61 angebracht, an den eine Spülleitung 62 geführt ist. Eingangsseitig kann die Spülleitung 62 an eine beliebige Quelle angeschlossen sein, die Spülflüssigkeit führt. Dies kann entweder - wie im Beispiel der Fig. 1 - ein Vorratsbehälter sein oder der Laugenbehälter 1, wenn mit Lauge gespült werden soll, oder die Frischwasserzuführung der Waschmaschine (nicht dargestellt), wenn mit zulaufendem Frischwasser gespült werden soll.

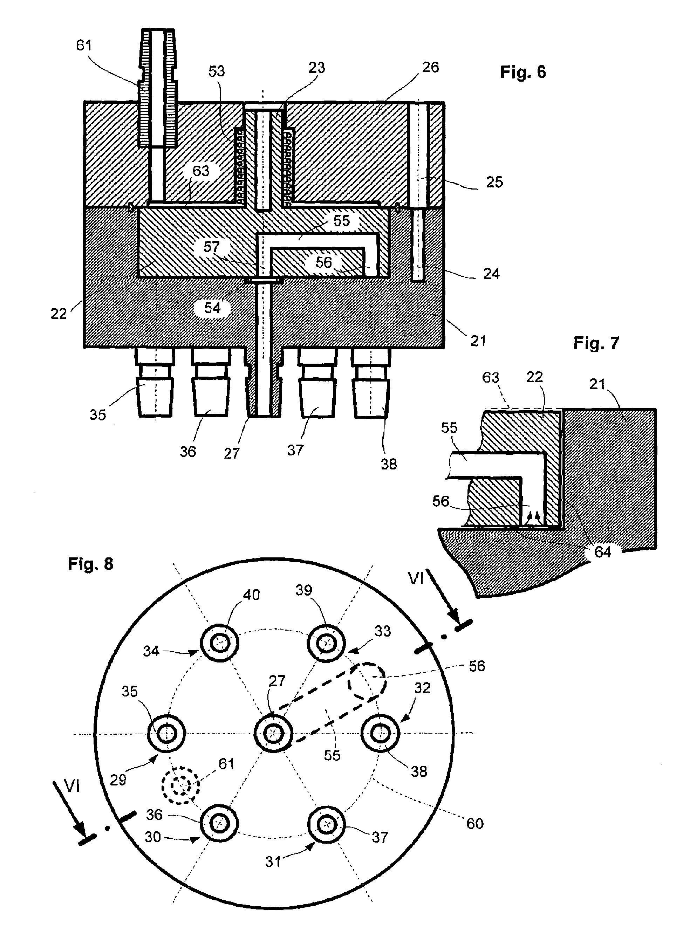

Das Mehrfachzugabeventil 16 in Fig. 6 hat einen ähnlichen Aufbau wie dasjenige der Fig. 2. Bei der Darstellung in Fig. 6 ist lediglich zu beachten, dass die Schnittfläche sich aus einer schräg liegenden Schnittlinie VI-VI in Fig. 8 ergibt, so dass auf ihrer Seiten die Stutzen 35 und 38 nicht - wie in Fig. 2 - geschnitten zu sehen sind. Stattdessen rückt der in den Gehäusedeckel 26 montierte Stutzen 61 in die Schnittfläche. So ist zu erkennen, dass dort zugeführte Spülflüssigkeit in den Zwischenraum 63 zwischen Gehäusedeckel 26 und Rotor 22 und von dort in alle den Rotor umgebenden Spalte 64 zwischen seiner Oberfläche und derjenigen der ihn umgebenden Körper, also auch des Gehäusebodens 21, gelangen kann. Auf diese Weise gelangt die Spülflüssigkeit auch zu etwa im Spalt 64 abgelagerten Resten von Waschhilfsmitteln, die zusammen mit dem Spülwasser von der Mündung 56 der Verbindungsleitung 55 aufgenommen und über den Stutzen 27 und die Pumpe 18 zum Laugenbehälter geführt werden. Dazu hat aber, wie aus Fig. 8 zu ersehen ist, der Rotor 22 eine Stellung, in der die Verbindungsleitung 55 ihre Mündung 56 nicht etwa auf einen der Stutzen 29 bis 34 für die Waschhilfsmittel sondern auf einen Raum zwischen zwei Stutzen, hier zwischen den beiden Stutzen 32 und 33, ausrichtet. So gelingt es, den Stutzen 61 und die Mündung 56 möglichst weit voneinander entfernt zu halten, wenn der Spalt 64 zwischen Rotor 22 und dem Gehäuseboden 21 von Waschhilfsmittelresten freigespült werden soll, damit das Spülmittel möglichst alle Spaltbereiche bestreicht.

Fig. 7 verdeutlicht noch die Spalte 64 als Zwischenräume zwischen den Flächen des Rotors 22 und den ihn umgebenden Flächen des Gehäusebodens 21. Die bogenförmigen Pfeile in der Mündung 56 der Verbindungsleitung 55 zeigen darüber hinaus, wie die Spülflüssigkeit (zusammen mit den Waschhilfsmittelresten) aus dem Spalt 64 in die Verbindungsleitung 55 gesogen und so über den zentralen Stutzen 27 zum Laugenbehälter 1 transportiert wird.

Die Erfindung ist nicht auf das dargestellte Ausführungsbeispiel beschränkt. Die Saugstutzen 29 bis 34 können auch an einer Kegelfläche oder an der Mantelfläche des Gehäusebodens 21 verteilt angeordnet sein. Entsprechend müsste der Rotor 22 angepasst sein. Auch können mehr oder weniger Stutzen auf der Kreislinie verteilt und muss die Verteilung nicht gleichmäßig sein; denn ein Getriebemotor 20 könnte dem Rotor 22 auch - in gewissen Grenzen - jede beliebige Stellung vermitteln. Anstelle des Getriebemotors kann auch jede beliebige andere Art eines kreisförmige Bewegungen erzeugenden Antriebsmittels dienen. Auch die Form der Dichtungen ist nicht festgelegt, ebenso wenig wie die Art und Form der Feder 53, die den Rotor 22 gegen den Gehäuseboden 21 drückt. Beispielsweise könnten auch aus Kunststoff geformte, miteinander im Eingriff stehende Rastelemente des Gehäusedeckels 26 oder des Gehäusebodens 21 mit solchen des Rotors 22 eine vergleichbare Federwirkung vermitteln. Eine Verschraubung des Gehäusedeckels 26 mit dem Gehäuseboden 21 könnte außerdem ein Justieren der Anpresskraft gestatten. Zur Spülung der Leitungswege muss auch nicht unbedingt Wasser im Vorrat gehalten werden, wenn sichergestellt werden kann, dass zum Zeitpunkt des Spülbedarfs Frischwasser aus dem Leitungsnetz oder vergleichsweise stark verdünnte Lauge aus dem Laugenbehälter 1 zur Verfügung steht. Dann muss lediglich die Leitung 11 mit der entsprechenden Quelle verbunden sein.

## Patentansprüche

1. Automatisch gesteuerte Waschmaschine mit einer Anlage zum maschinellen Dosieren von in Vorratsbehältern (4, 5. 6) vorgehaltenen, flüssigen oder pastösen Waschhilfsmitteln, welche Anlage ein Mehrfachzugabeventil (16) umfasst, welches Mehrfachzugabeventil (16) eine in einem Gehäuseboden (21) angeordnete, zentrale Flüssigkeitsleitung (17) und mehrere auf einer konzentrisch zur Achse eines Rotors verlaufenden Kreislinie (60) im Gehäuseboden (21) angeordneten Stutzen (29 bis 34) aufweist, die einzeln durch eine Verbindungsleitung (55) innerhalb des motorisch antreibbaren Rotors (22) mit dem Abgang (zentrale Leitung 27) verbindbar sind und die für die Verbindung mit der Verbindungsleitung (55) eine Dichtung (47, 50, 54) aufweisen, **dadurch gekennzeichnet, dass**
- das Mehrfachzugabeventil (16) in der Weise zum Zugeben von ausgewählten flüssigen oder pastösen Waschhiffsmitteln dient, dass jeder der Stutzen (29 bis 33 bzw 29 bis 34) an einen der Vorratsbehälter (4 bis 7) angeschlossen und die Flüssigkeitsleitung (17) über eine Pumpe (18) mit einer Zugabeeinrichtung (3) für einen Wäschebehandlungsraum (1) verbindbar ist,
- der Rotor (22) durch eine dauerhaft axial auf ihn in Richtung des Gehäusebodens (21) wirkende Kraft die Dichtungen (47, 50, 54) presst, bis die Kontaktflächen des Rotors (22) und des Gehäusebodens (21) im Wesentlichen möglichst eng gegenüber stehen, und
- eine Zuführung (61, 62) von Spülflüssigkeit, vorzugsweise Wasser, vorgesehen ist und keine Dichtung im Übergang zur Verbindungsleitung (55) aufweist.

2. Waschmaschine nach Anspruch 1, **dadurch gekennzeichnet, dass** die Kraft durch eine zentral angeordnete Druckfeder (53) zwischen einem Gehäusedeckel (26) des Mehrfachzugabeventils (16) und der oberen Fläche des Rotors (22) dargestellt ist.

3. Waschmaschine nach Anspruch 1, **dadurch gekennzeichnet, dass** die Kraft durch eine passgenaue Positionierung des Rotors (22) im Gehäuseboden (21) dargestellt ist.

4. Waschmaschine nach Anspruch 1, **dadurch gekennzeichnet, dass** die Kraft durch eine passgenaue Verschraubung eines Gehäusedeckels (26) am Gehäuseboden (21) mit definiertem Abstand zwischen dem Gehäusedeckel (26) und dem Gehäuseboden (21) dargestellt ist.

5. Waschmaschine nach Anspruch 1 oder einem der Ansprüche 3 bis 5, **dadurch gekennzeichnet, dass** die Dichtungen (47 bis 52) aus einem hochflexiblen Material mit geringer Shore-Härte von ca. 30 bis ca. 40 Shore-Härte-Einheiten bestehen.

6. Waschmaschine nach Anspruch 1, **dadurch gekennzeichnet, dass** die Zuführung (61) möglichst weit vom Abgang (zentrale Leitung 27) entfernt angeordnet ist.

7. Waschmaschine nach Anspruch 6, **dadurch gekennzeichnet, dass** die Zuführung (61) Ober der dem Gehäuseboden (21) gegenüber liegenden Fläche des Rotors (22) mündet und der Rotor (22) in eine Drehposition bringbar ist, in der die über die Kreislinie (60) streichende Mündung (56) der Verbindungsleitung (55) zwischen zwei für die flüssigen oder pastösen Waschhilfsmittel vorgesehenen Stutzen (29 bis 34) steht, und die Pumpe (18) gleichzeitig aktiv ist.

8. Waschmaschine nach Anspruch 7, **dadurch gekennzeichnet, dass** die Zuführung durch einen weiteren Stutzen (61) dargestellt ist, der in einem oberhalb des Rotors (22) sitzenden Gehäusedeckel (26) angeordnet ist.

9. Waschmaschine nach Anspruch 1, **dadurch gekennzeichnet, dass** die Oberseite des Rotors (22) frei zugänglich im Zuflussbereich der Spülflüssigkeit liegt.

10. Waschmaschine nach Anspruch 9, **dadurch gekennzeichnet, dass** die Spülflüssigkeit durch einen Frischwasserzulauf der Waschmaschine gebildet ist.

11. Verfahren zum Spülen eines Mehrfachzugabeventils (16) in einer automatisch gesteuerten Waschmaschine mit einer Anlage zum maschinellen Dosieren von in Vorratsbehälter (4, 5. 6) vorgehaltenen, flüssigen oder pastösen Waschhilfsmitteln, welche Anlage ein Mehrfachzugabeventil (16) umfasst, welches Mehrfachzugabeventil (16) eine in einem Gehäuseboden (21) angeordnete, zentrale Flüssigkeitsleitung (17) und mehrere auf einer konzentrisch zur Achse eines Rotors verlaufenden Kreislinie (60) im Gehäuseboden (21) angeordneten Stutzen (29 bis 34) aufweist, die einzeln durch eine Verbindungsleitung (55) innerhalb des motorisch antreibbaren Rotors (22) mit dem Abgang (zentrale Leitung 27) verbindbar sind und die für die Verbindung mit der Verbindungsleitung (55) eine Dichtung (47, 50, 54) aufweisen, wobei:
- das Mehrfachzugabeventil (16) in der Weise zum Zugeben von ausgewählten flüssigen oder pastösen Waschhilfsmitteln dient, dass jeder der Stutzen (29 bis 33 bzw. 29 bis 34) an einen der Vorratsbehälter (4 bis 7) angeschlossen und die Flüssigkeitsleitung (17) über eine Pumpe (18) mit einer Zugabeeinrichtung (3) für einen Wäschebehandlungsraum (1) verbindbar ist,
- der Rotor (22) durch eine dauerhaft axial auf ihn in Richtung des Gehäusebodens (21) wirkende Kraft die Dichtungen (47, 50, 54) presst, bis die Kontaktflächen des Rotors (22) und des Gehäusebodens (21) im Wesentlichen möglichst eng gegenüber stehen, und
- eine Zuführung (61, 62) von Spülflüssigkeit, vorzugsweise Wasser, vorgesehen ist und keine Dichtung im Übergang zur Verbindungsleitung (55) aufweist,
**dadurch gekennzeichnet, dass** während des Spülvorgangs, in dem der Rotor (22) in eine Drehposition für die Spülstellung gefahren und die Spülflüssigkeit von der Zuführung (38, 61) durch die Verbindungsleitung (55) zur zentralen Flüssigkeitsleitung (17) gefördert wird, der Rotor (22) in der Drehposition um wenige Winkelgrade bewegt wird.

12. Verfahren nach Anspruch 11, **dadurch gekennzeichnet, dass** der Rotor (22) in der Drehposition mit wechselnden Drehrichtungen bewegt wird.

13. Verfahren nach Anspruch 12, **dadurch gekennzeichnet, dass** der Rotor (22) pulsierend bewegt wird.

## Claims

1. Automatically controlled washing machine with an installation for mechanical dosing of liquid or pasty washing agents stored in storage containers (4, 5, 6), which installation comprises a multiple feed valve (16) having a central liquid duct (17), which is arranged in a housing base (21), and several stub pipes (29 to 34), which are arranged in the housing base (21) on a circular line (60) extending concentrically with respect to the axis of a rotor and which are individually connectible with the outlet (central line 27) by a connecting line (55) within the motor-drivable rotor (22) and have a seal (47, 50, 54) for the connection with the connecting line (55), **characterised in that**
- the multiple feed valve (16) serves for feeding selected liquid or pasty washing agents in the manner that each of the stub pipes (29 to 33 or 29 to 34) is connected with one of the storage containers (4 to 7) and the liquid duct (17) is connectible by way of pump (18) with a feed device (3) for a laundry treatment space (1),
- the rotor (22) presses the seals (47, 50, 54), by a force permanently acting axially on the rotor in the direction of the housing base (21), until the contact surfaces of the rotor (22) and the housing base (21) are disposed substantially as close as possible to one another and
- a feed (61, 62) of liquid, preferably water, is provided and there is no seal in the transition to the connecting duct (55).

2. Washing machine according to claim 1, **characterised in that** the force is represented by centrally arranged compression spring (53) between a housing cover (26) of the multiple feed valve (16) and the upper surface of the rotor (22).

3. Washing machine according to claim 1, **characterised in that** the force is represented by a precisely fitted positioning of the rotor (22) in the housing base (21).

4. Washing machine according to claim 1, **characterised in** the force is represented by a precisely fitted screw-connection of a housing cover (26) at the housing base (21) with a defined spacing between the housing cover (26) and the housing base (21).

5. Washing machine according to claim 1 or any one of claims 3 to 5, **characterised in that** the seals (47 to 52) consist of a highly flexible material with a small Shore hardness of approximately 30 to approximately 40 Shore hardness units.

6. Washing machine according to claim 1, **characterised in that** the feed (61) is arranged as far away as possible from the outlet (central duct 27).

7. Washing machine according to claim 6, **characterised in that** the feed (61) opens by way of the surface, which is opposite the housing base (21), of the rotor (22) and the rotor (22) can be brought into a rotational position in which the opening (56), which extends over the circular line (60), of the connecting duct (55) stands between two stub pipes (29 to 34) provided for the liquid or pasty washing agent, and the pump (18) is active at the same time.

8. Washing machine according to claim 7, **characterised in that** the feed is represented by a further stub pipe (61) which is arranged in a housing cover (26) seated above the rotor (22).

9. Washing machine according to claim 1, **characterised in that** the upper side of the rotor (22) is freely accessible in the inflow region of the liquid.

10. Washing machine according to claim 9, **characterised in that** the rinsing liquid is formed by a fresh water feed of the washing machine.

11. Method of flushing a multiple feed valve (16) in an automatically controlled washing machine with an installation for mechanical dosing of liquid or pasty washing agents stored in storage containers (4, 5, 6), which installation comprises a multiple feed valve (16) having a central liquid duct (17), which is arranged in a housing base (21), and several stub pipes (29 to 34), which are arranged in the housing base (21) on a circular line (60) extending concentrically with respect to the axis of a rotor and which are individually connectible with the outlet (central line 27) by a connecting line (55) within the motor-drivable rotor (22) and have a seal (47, 50, 54) for the connection with the connecting line (55), wherein:
- the multiple feed valve (16) serves for feeding selected liquid or pasty washing agents in the manner that each of the stub pipes (29 to 33 or 29 to 34) is connected with one of the storage containers (4 to 7) and the liquid duct (17) is connectible by way of pump (18) with a feed device (3) for a laundry treatment space (1),
- the rotor (22) presses the seals (47, 50, 54), by a force permanently acting axially on the rotor in the direction of the housing base (21), until the contact surfaces of the rotor (22) and the housing base (21) are disposed substantially as close as possible to one another and
- a feed (61, 62) of liquid, preferably water, is provided and there is no seal in the transition to the connecting duct (55),
**characterised in that** during the flushing process, in which the rotor (22) is moved into a rotational position for the flushing setting and the flushing liquid is conveyed from the feed (38, 61) through the connecting duct (55) to the central liquid duct (17), the rotor (22) is moved into the rotational position through a few degrees of angle.

12. Method according to claim 11, **characterised in that** the rotor (22) is moved into the rotational position with alternating rotational directions.

13. Method according to claim 12, **characterised in that** the rotor (22) is moved in pulsating manner.

## Revendications

1. Lave-linge commandé automatiquement, comprenant une installation pour le dosage mécanique d'agents de lavage auxiliaires, liquides ou pâteux, maintenus dans des réservoirs (4, 5, 6), laquelle installation comprend une soupape d'alimentation à voies multiples (16), laquelle soupape d'alimentation à voies multiples (16) présente une conduite de liquide centrale (17) disposée dans un fond de boîtier (21) et plusieurs embouts (29 à 34) disposés dans le fond de boîtier (21) sur une ligne circulaire (60) s'étendant de manière concentrique par rapport à l'axe d'un rotor, lesquels embouts sont raccordables individuellement à la sortie (conduite centrale 27) au moyen d'une conduite de liaison (55) ménagée à l'intérieur du rotor (22) commandable par moteur et présentent un joint d'étanchéité (47, 50, 54) pour la liaison avec la conduite de liaison (55), **caractérisé en ce que**
- la soupape d'alimentation à voies multiples (16) sert à l'adjonction d'agents de lavage auxiliaires sélectionnés, liquides ou pâteux, de telle manière que chacun des embouts (29 à 33, resp. 29 à 34) soit raccordé à l'un des réservoirs (4 à 7) et **en ce que** la conduite de liquide (17) puisse être raccordée à un dispositif d'adjonction (3) par l'intermédiaire d'une pompe (18) pour un espace de traitement de linge (1),
- le rotor (22) presse les joints d'étanchéité (47, 50, 54) en raison d'une force agissant de manière durable axialement sur lui en direction du fond de boîtier (21) jusqu'à ce que les surfaces de contact du rotor (22) et du fond de boîtier (21) soient opposées essentiellement le plus étroitement possible, et
- une alimentation (61, 62) de liquide de lavage, de préférence d'eau, est ménagée et ne présente pas de joint d'étanchéité au passage vers la conduite de liaison (55).

2. Lave-linge selon la revendication 1, **caractérisé en ce que** la force est représentée par un ressort de compression (53) disposé de manière centrale entre un couvercle de boîtier (26) de la soupape d'alimentation à voies multiples (16) et la surface supérieure du rotor (22).

3. Lave-linge selon la revendication 1, **caractérisé en ce que** la force est représentée par un positionnement ajusté avec précision du rotor (22) dans le fond de boîtier (21).

4. Lave-linge selon la revendication 1, **caractérisé en ce que** la force est représentée par un raccordement à vis avec précision d'un couvercle de boîtier (26) sur le fond de boîtier (21) avec un écart défini entre le couvercle de boîtier (26) et le fond de boîtier (21).

5. Lave-linge selon la revendication 1 ou selon l'une quelconque des revendications 3 à 5, **caractérisé en ce que** les joints d'étanchéité (47 à 52) sont constitués d'un matériau hautement flexible ayant une moindre dureté Shore d'env. 30 à env. 40 unités de dureté Shore.

6. Lave-linge selon la revendication 1, **caractérisé en ce que** l'alimentation (61) est disposée le plus loin possible de la sortie (conduite centrale 27).

7. Lave-linge selon la revendication 6, **caractérisé en ce que** l'alimentation (61) aboutit au-dessus de la surface du rotor (22), située à l'opposé du fond de boîtier (21), et **en ce que** le rotor (22) peut être mis dans une position de rotation, dans laquelle l'embouchure (56), passant sur la ligne circulaire (60), de la conduite de liaison (55) se trouve entre deux embouts (29 à 34) ménagés pour les agents de lavage auxiliaires liquides ou pâteux, et **en ce que** la pompe (18) est simultanément active.

8. Lave-linge selon la revendication 7, **caractérisé en ce que** l'alimentation est représentée par un embout supplémentaire (61) qui est disposé dans un couvercle de boîtier (26) situé au-dessus du rotor (22).

9. Lave-linge selon la revendication 1, **caractérisé en ce que** le côté supérieur du rotor (22) est situé de manière librement accessible dans la zone d'arrivée du liquide de lavage.

10. Lave-linge selon la revendication 9, **caractérisé en ce que** le liquide de lavage est formé par une arrivée d'eau fraîche du lave-linge.

11. Procédé destiné à rincer une soupape d'alimentation à voies multiples (16) dans un lave-linge commandé automatiquement comprenant une installation pour le dosage mécanique d'agents de lavage auxiliaires, liquides ou pâteux, maintenus dans des réservoirs (4, 5, 6), laquelle installation comprend une soupape d'alimentation à voies multiples (16), laquelle soupape d'alimentation à voies multiples (16) présente une conduite de liquide centrale (17) disposée dans un fond de boîtier (21) et plusieurs embouts (29 à 34) disposés dans le fond de boîtier (21) sur une ligne circulaire (60) s'étendant de manière concentrique par rapport à l'axe d'un rotor, lesquels embouts sont raccordables individuellement à la sortie (conduite centrale 27) au moyen d'une conduite de liaison (55) ménagée à l'intérieur du rotor (22) commandable par moteur et présentent un joint d'étanchéité (47, 50, 54) pour la liaison avec la conduite de liaison (55),
- la soupape d'alimentation à voies multiples (16) servant à l'adjonction d'agents de lavage auxiliaires sélectionnés, liquides ou pâteux, de telle manière que chacun des embouts (29 à 33, resp. 29 à 34) soit raccordé à l'un des réservoirs (4 à 7) et en ce que la conduite de liquide (17) puisse être raccordée à un dispositif d'adjonction (3) par l'intermédiaire d'une pompe (18) pour un espace de traitement de linge (1),
- le rotor (22) pressant les joints d'étanchéité (47, 50, 54) en raison d'une force agissant de manière durable axialement sur lui en direction du fond de boîtier (21) jusqu'à ce que les surfaces de contact du rotor (22) et du fond de boîtier (21) soient opposées essentiellement le plus étroitement possible, et
- une alimentation (61, 62) de liquide de lavage, de préférence d'eau, étant ménagée et ne présentant pas de joint d'étanchéité au passage vers la conduite de liaison (55), **caractérisé en ce que** pendant l'opération de lavage, pendant laquelle le rotor (22) est mis dans une position de rotation pour la position de lavage et le liquide de lavage est amené de l'alimentation (38, 61) vers la conduite de liquide centrale (17) au moyen de la conduite de liaison (55), le rotor (22) se trouvant dans la position de rotation est mû de quelques degrés d'angle.

12. Procédé selon la revendication 11, **caractérisé en ce que** le rotor (22) se trouvant dans la position de rotation est mû avec des directions de rotation alternantes.

13. Procédé selon la revendication 12, **caractérisé en ce que** le rotor (22) est mû de manière pulsante.
